# EUROPEAN PATENT SPECIFICATION

(11) **EP 4 261 681 B1**
(45) Date of publication and mention of the grant of the patent: **04.06.2025**
(21) Application number: 22739581.1
(22) Date of filing: 07.01.2022
(51) Int. Cl.: G06F 9/4401, G06F 9/445, G06F 9/448, G06F 9/38

(54) **ELECTRONIC DEVICE AND METHOD FOR LOADING KERNEL MODULE OF ELECTRONIC DEVICE**
ELEKTRONISCHE VORRICHTUNG UND VERFAHREN ZUM LADEN EINES KERNELMODULS EINER ELEKTRONISCHEN VORRICHTUNG
DISPOSITIF ÉLECTRONIQUE ET PROCÉDÉ DE CHARGEMENT DE MODULE DE NOYAU DU DISPOSITIF ÉLECTRONIQUE

(30) Priority: 13.01.2021 KR 20210004585
(43) Date of publication of application: 18.10.2023
(73) Proprietor: Samsung Electronics Co., Ltd., Suwon-si, Gyeonggi-do 16677 (KR)
(72) Inventor: KIM, Jeehong, Suwon-si Gyeonggi-do 16677 (KR); KIM, Dohyoung, Suwon-si Gyeonggi-do 16677 (KR); KIM, Jeongrae, Suwon-si Gyeonggi-do 16677 (KR)
(74) Representative: Nederlandsch Octrooibureau
(86) International application number: PCT/KR2022/000285
(87) International publication number: WO 2022/154383

(56) References cited:
- US-A1- 2008 148 244
- US-A1- 2013 016 110
- US-A1- 2019 180 187
- US-B1- 7 890 664
- LEE JANGHAENG ET AL: "Orchestrating Multiple Data-Parallel Kernels on Multiple Devices", PROCEEDINGS OF THE 22ND INTERNATIONAL CONFERENCE ON PARALLEL ARCHITECTURES AND COMPILATION TECHNIQUES, IEEE, PISCATAWAY, NJ, USA, 18 October 2015 (2015-10-18), pages 355 - 366, XP032878656, ISSN: 1089-795X, ISBN: 978-0-7695-2229-6, [retrieved on 20160308], DOI: 10.1109/PACT.2015.14
- LEE JANGHAENG; SAMADI MEHRZAD; MAHLKE SCOTT: "Orchestrating Multiple Data-Parallel Kernels on Multiple Devices", PROCEEDINGS OF THE 22ND INTERNATIONAL CONFERENCE ON PARALLEL ARCHITECTURES AND COMPILATION TECHNIQUES, IEEE, PISCATAWAY, NJ, USA, 18 October 2015 (2015-10-18), Piscataway, NJ, USA , pages 355 - 366, XP032878656, ISSN: 1089-795X, ISBN: 978-0-7695-2229-6, DOI: 10.1109/PACT.2015.14

## Description

### Technical Field

The following embodiments relate to an electronic device and a method of loading a kernel module of the electronic device.

### Background Art

The Android operating system (OS) may load a kernel module using a generic kernel image (GKI). The GKI may refer to a policy for minimizing the difference between a Linux mainline kernel and an Android kernel and using an Android kernel image by a vendor and an original equipment manufacturing (OEM) company without modification to decrease fragmentation among a Linux mainline kernel, a chipset vendor kernel, and an OEM kernel.

To operate a kernel driver of a chipset vendor and that of an OEM company, kernel drivers of the OEM company and the chipset vendor, which are developed as built-in conventionally and included in a kernel image, may need to be developed in the form of a loadable kernel module.

Because the loadable kernel module may load or unload a built loadable kernel module at an operation time of a terminal even if a kernel module is not built therewith when the kernel image is built, the loadable kernel module may properly load a kernel module that is built with a GKI of a different version or another kernel when the GKI is updated with a security or bug fix. LEE JANGHAENG ET AL: "Orchestrating Multiple Data-Parallel Kernels on Multiple Devices", PROCEEDINGS OF THE 22ND INTERNATIONAL CONFERENCE ON PARALLEL ARCHITECTURES AND COMPILATION TECHNIQUES, IEEE, PISCATAWAY, NJ, USA, 18 October 2015 (2015-10-18), pages 355-366, discloses a two phased approach for loading kernel modules that combines course grain scheduling of kernels followed by opportunistic fine-grained workgroup-level partitioning to exploit idle resources.

### Disclosure of the Invention

### Technical Goals

A typical method of loading a kernel module may cause a delay in the module load speed because the method may not load kernel modules in a plurality of threads in parallel and may continuously load the kernel modules in a single thread.

To load modules in a plurality of threads, it may be required to classify modules performed in a limited thread and group the classified modules.

### Technical Solutions

The present invention is defined by the appended claims.

According to various embodiments, an electronic device include at least one processor and a memory configured to store instructions to be executed by the processor, wherein the processor is configured to generate dependency relationship data based on dependency among a plurality of kernel modules executed by the processor determine a first kernel module to be loaded in a first stage among the plurality of kernel modules based on the dependency relationship data, and generate a plurality of kernel module groups by determining a second kernel module to be loaded in a second stage among the plurality of kernel modules based on the dependency relationship data and the first kernel module.

According to various embodiments, an electronic device include at least one processor and a memory configured to store instructions to be executed by the processor, wherein the processor is configured to receive a plurality of kernel module groups generated based on dependency among a plurality of kernel modules executed by the processor, perform parallel loading on the plurality of kernel modules based on the plurality of kernel module groups, and generate a restructured kernel module group by restructuring the plurality of kernel module groups based on the load time of the plurality of kernel modules.

According to various embodiments, a method of an electronic device to load a kernel module includes receiving a plurality of kernel modules generated based on dependency among a plurality of kernel modules, performing parallel loading on the plurality of kernel modules based on the plurality of kernel module groups, and generating a restructured kernel module group by restructuring the plurality of kernel module groups based on a load time of the plurality of kernel modules.

### Effects

According to various embodiments, an electronic device may improve the load speed of a kernel module by classifying the kernel module and increasing the number of parallel loads.

According to various embodiments, the electronic device may improve the load speed of a kernel module by grouping kernel modules and loading the grouped kernel modules in parallel.

According to various embodiments, stability may be secured and load speed may be improved by restructuring a kernel module group based on the actual load time of a kernel module.

### Brief Description of Drawings

FIG. 1 is a block diagram of an electronic device in a network environment according to various embodiments.
FIG. 2 illustrates a kernel module group generated based on kernel module dependency according to various embodiments.
FIG. 3 illustrates an operation of loading a kernel module, according to various embodiments.
FIG. 4 is a flowchart illustrating operations of an electronic device during a build-time and a run-time, according to various embodiments.
FIG. 5 illustrates dependency of kernel modules according to various embodiments.
FIG. 6 illustrates a dependency graph according to various embodiments.
FIG. 7A illustrates an example of a kernel module group according to various embodiments.
FIG. 7B illustrates an example of a restructured kernel module group according to various embodiments.
FIG. 8A illustrates an example of a kernel module group according to various embodiments.
FIG. 8B illustrates an example of a restructured kernel module group according to various embodiments.
FIG. 9 illustrates a restructuring operation performed by an electronic device, according to various embodiments.
FIG. 10 is a flowchart illustrating an operation of an electronic device, according to various embodiments.

### Best Mode for Carrying Out the Invention

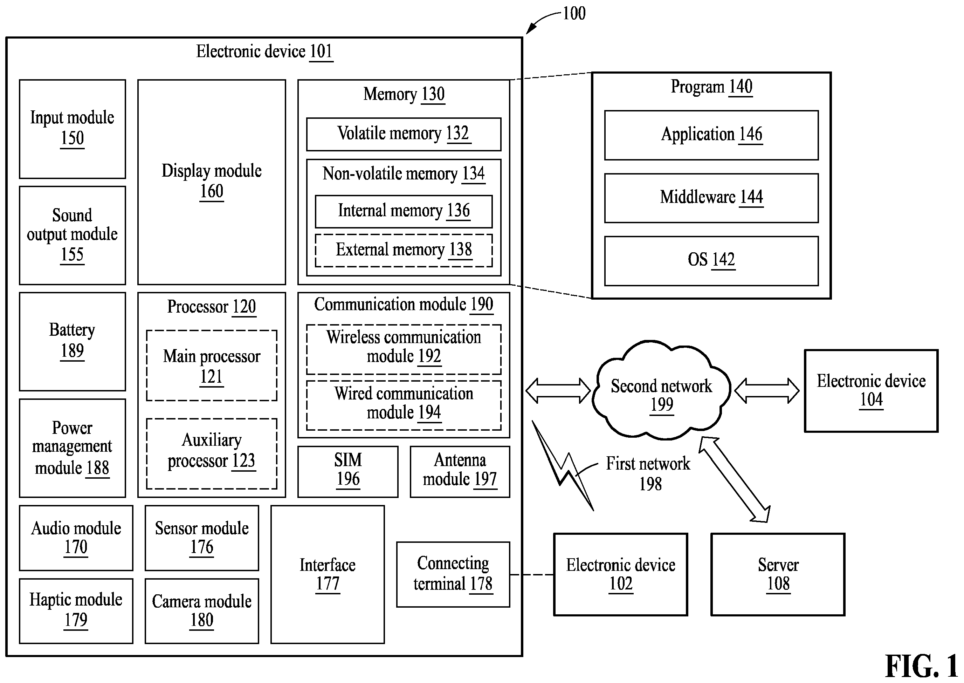

FIG. 1 is a block diagram of an electronic device 101 in a network environment 100 according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to one embodiment, the electronic device 101 may communicate with the electronic device 104 via the server 108. According to one embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to one embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to one embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to one embodiment, the auxiliary processor 123 (e.g., an ISP or a CP) may be implemented as a portion of another component (e.g., the camera module 180 or the communication module 190) that is functionally related to the auxiliary processor 123. According to one embodiment, the auxiliary processor 123 (e.g., an NPU) may include a hardware structure specified for artificial intelligence (AI) model processing. An AI model may be generated through machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to one embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to one embodiment, the display module 160 may include a touch sensor adapted to sense a touch, or a pressure sensor adapted to measure an intensity of a force incurred by the touch.

The audio module 170 may convert a sound into an electrical signal or vice versa. According to one embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to one embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to one embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to one embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to one embodiment, the haptic module 179 may include, for example, a motor, a piezoelectric element, or an electric stimulator.

The camera module 180 may capture a still image and moving images. According to one embodiment, the camera module 180 may include one or more lenses, image sensors, ISPs, or flashes.

The power management module 188 may manage power supplied to the electronic device 101. According to one embodiment, the power management module 188 may be implemented as, for example, at least a part of a power management integrated circuit (PMIC).

The battery 189 may supply power to at least one component of the electronic device 101. According to one embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support a direct (e.g., wired) communication or a wireless communication. According to one embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to one embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to one embodiment, the antenna module 197 may include an antenna including a radiating element including a conductive material or a conductive pattern formed in or on a substrate (e.g., a printed circuit board (PCB)). According to one embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to one embodiment, another component (e.g., a radio frequency integrated circuit (RFIC)) other than the radiating element may be additionally formed as a part of the antenna module 197.

According to one embodiment, the antenna module 197 may form a mmWave antenna module. According to one embodiment, the mmWave antenna module may include a PCB, an RFIC disposed on a first surface (e.g., a bottom surface) of the PCB or adjacent to the first surface and capable of supporting a designated a high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to one embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to one embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to one embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

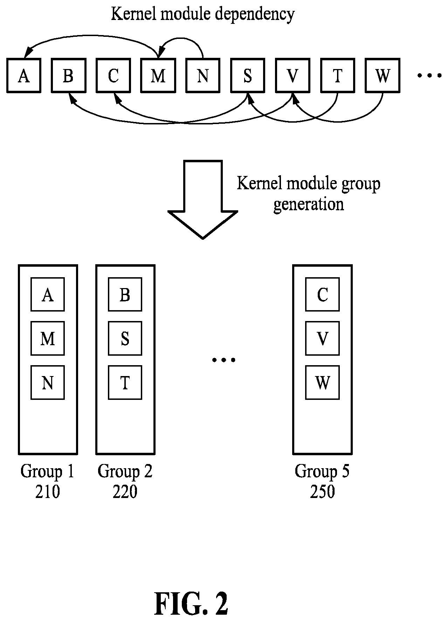

FIG. 2 is a diagram illustrating an operation of managing a memory of an electronic device, according to various embodiments.

According to various embodiments, a processor (e.g., the processor 120 of FIG. 1) may load a kernel module. The processor 120 may generate a kernel module group by grouping a plurality of kernel modules, may secure the stability of an electronic device (e.g., the electronic device 101 of FIG. 1) by loading kernel modules in parallel based on the kernel module group, and may improve an operation speed.

According to various embodiments, the kernel may be a core component of an OS and may be a program for managing a resource in a computer for a user program (or an application) to use the resource. The kernel may provide various services required to operate an OS and an application program. For example, the kernel may be system software providing an interface for managing a process, a file, a network, and a device. The kernel module may be a unit of independent software or hardware dynamically loaded to or unloaded from the kernel.

According to various embodiments, the processor 120 may classify a module to be loaded in a first stage (e.g., first stage init) and a second stage (e.g., second stage init) in a build-time based on dependency between kernel modules and may generate a kernel module group by grouping modules loaded in the second stage.

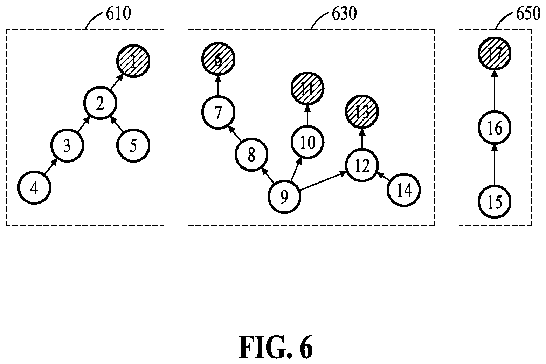

According to various embodiments, the processor 120 may generate dependency relationship data based on dependency among a plurality of kernel modules executed by the processor 120. The dependency relationship data may include a dependency graph including nodes and an edge connecting the nodes to each other. A process of generating the dependency graph based on the dependency is described with reference to FIG. 6. The kernel module dependency may include a loading order or a priority required when the kernel modules are loaded.

According to various embodiments, among a plurality of kernel module A, B, C, M, N, S, V, T, and W, the processor 120 may generate a plurality of kernel module groups 210 and 220 to 250 based on dependency among the kernel modules. Although three kernel module groups are illustrated as an example in FIG. 2, the number of kernel module groups may be less than three or greater than three according to an embodiment.

According to various embodiments, to load the kernel module N in FIG. 2, the kernel module M may need to be priorly loaded. To load the kernel module N, the kernel module A may need to be priorly loaded. In this case, the kernel modules A, M, and N may have dependencies on each other.

According to various embodiments, to load the kernel module T in FIG. 2, the kernel module S may need to be priorly loaded. To load the kernel module S, the kernel module B may need to be priorly loaded. In this case, the kernel modules B, S, and T may have dependencies on each other.

According to various embodiments, to load the kernel module W in FIG. 2, the kernel module V may need to be priorly loaded. To load the kernel module V, the kernel module C may need to be priorly loaded. In this case, the kernel modules C, V, and W may have dependencies on each other.

According to various embodiments, the processor 120 may generate a group 1 210 and a group 2 220 to a group 5 250 based on the dependency.

According to various embodiments, the processor 120 may determine a first kernel to be loaded in the a first stage among a plurality of kernel modules based on the dependency relationship data.

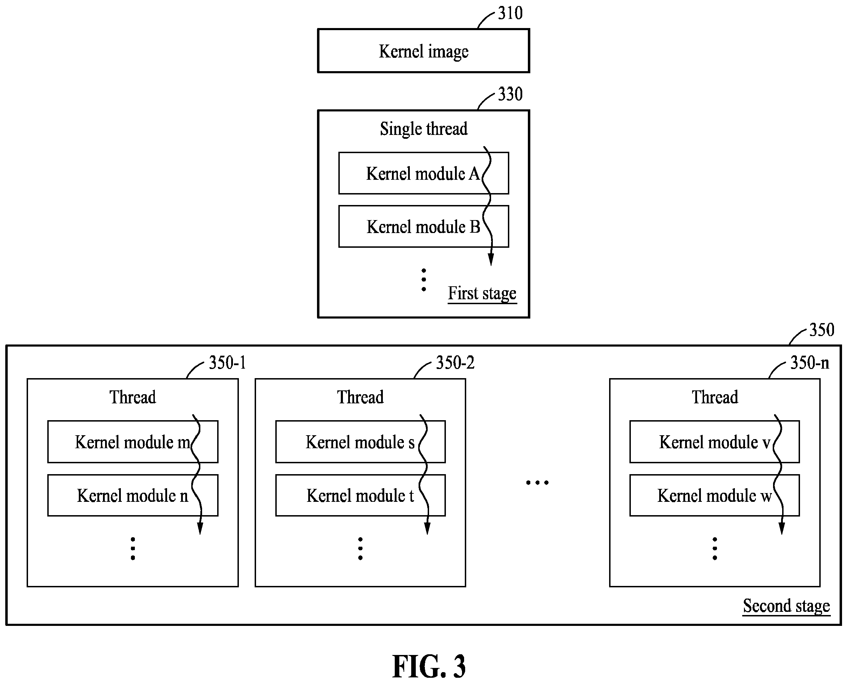

FIG. 3 illustrates an operation of loading a kernel module, according to various embodiments.

Referring to FIG. 3, a processor (e.g., the processor 120 of FIG. 1) may load a kernel module. The processor 120 may perform parallel loading on a plurality of kernel modules based on a plurality of kernel module groups generated based on dependency.

According to various embodiments, a kernel image 310 may include at least one thread. The kernel image 310 may be a file including content of a kernel stored in a memory (e.g., the memory 130 of FIG. 1). The kernel image 310 may include at least one thread and a plurality of kernel modules included in the thread.

According to various embodiments, the processor 120 determines a first kernel to be loaded in a first stage 330 among a plurality of kernel modules based on dependency relationship data. The processor 120 generates a plurality of kernel module groups by determining a second kernel module to be loaded in a second stage among the plurality of kernel modules based on the dependency relationship data and the first kernel module. The processor 120 may classify the plurality of kernel modules into the plurality of kernel module groups based on the first kernel module and the second kernel module.

According to various embodiments, a single thread may be executed in the first stage 330. The processor 120 may initialize a kernel driver through the single thread of the first stage 330. The first stage 330 may continuously load the plurality of kernel modules in the single thread.

According to various embodiments, the processor 120 performs parallel loading of kernel modules using a plurality of threads 350-1, 350-2, .., 350-n of a second stage 350. The processor 120 may perform parallel loading on the plurality of kernel modules based on the plurality of kernel module groups in the second stage 350. An operation of loading a kernel module of the first stage 330 may be performed chronologically ahead of an operation of loading a kernel module of the second stage 350.

According to various embodiments, the processor 120 may classify kernel modules to be loaded in the first stage 330 and the second stage 350 and may improve the load speed of all the kernel modules by increasing the number of parallel loadings occurring in the second stage 350.

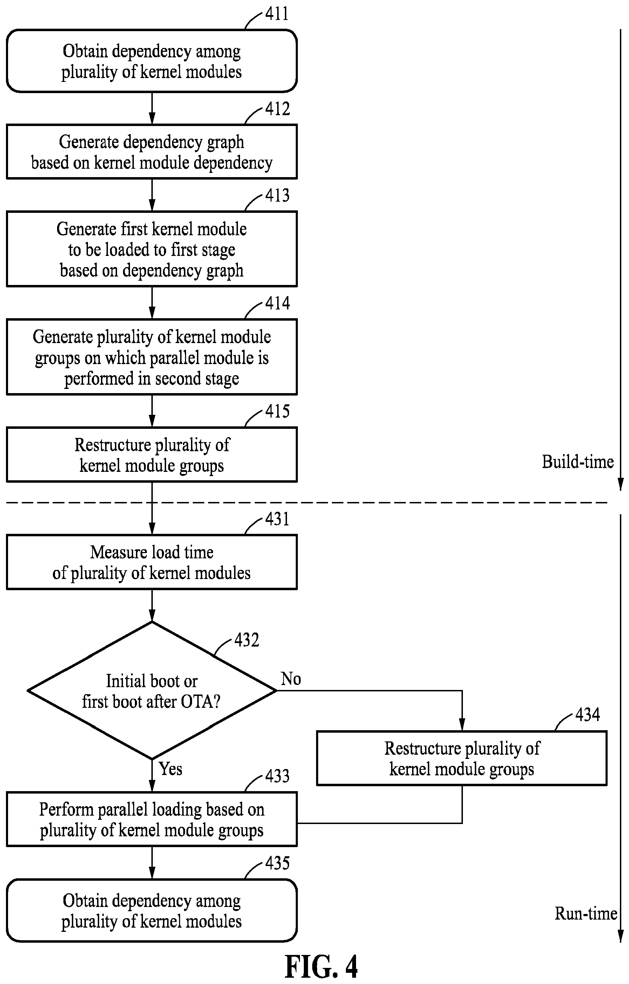

FIG. 4 is a flowchart illustrating operations of an electronic device during a build-time and a run-time, according to various embodiments.

Referring to FIG. 4, according to various embodiments, a build-time operation and a run-time operation may be performed by different hardware devices. The build-time operation may be performed by a first electronic device (e.g., the electronic device 101 of FIG. 1) and the run-time operation may be performed by a second electronic device (e.g., the electronic device 101 of FIG. 1).

According to various embodiments, the first electronic device may include a first processor (e.g., the first processor 120 of FIG. 1) and the second electronic device may include a second processor (e.g., the second processor 120 of FIG. 1).

According to various embodiments, in operation 411, the first processor obtains dependency among a plurality of kernel modules. In operation 412, the first processor generates a dependency graph based on the dependency among the plurality of kernel modules. The first processor may generate nodes corresponding to the plurality of kernel modules. The first processor generates the dependency graph by generating an edge connecting the nodes based on the dependency.

According to various embodiments, the first processor generates the dependency graph by determining a first kernel module to be a root node of the dependency graph and connecting a second kernel module as a child node of the root node.

According to various embodiments, the first processor may generate a data set related to relationship information among kernel modules and may identify dependency among the kernel modules through the data set.

According to various embodiments, in operation 413, the first processor determines the first kernel module to be loaded in a first stage among the plurality of kernel modules based on the dependency graph. In operation 414, the first processor generates a plurality of kernel module groups by determining a second kernel module to be loaded in a second stage among the plurality of kernel modules based on the dependency graph and the first kernel module. The operation of loading a kernel module of the first stage may be performed chronologically ahead of the operation of loading a kernel module of the second stage.

According to various embodiments, the first processor performs parallel loading on the plurality of kernel modules based on the plurality of kernel module groups.

According to various embodiments, in operation 415, the first processor may restructure the plurality of kernel module groups. The first processor measures a load time of the plurality of kernel module groups. The first processor generates a restructured kernel module group by restructuring the plurality of kernel module groups based on the load time.

According to various embodiments, the first processor integrates a first kernel module group with a second kernel module group in the plurality of kernel module groups based on the load time. The first processor measures load times of the first kernel module group, the second kernel module group, and a third kernel module group among the plurality of kernel module groups.

According to various embodiments, when the load time of the third kernel module group is greater than the load time of the first kernel module group and the load time of the second kernel module group, the first processor integrates the first kernel module group with the second kernel module group.

According to various embodiments, the first processor may generate a kernel module group by separating at least one kernel module group based on the load time. The first processor may measure load times of the first kernel module group and the second kernel module group among the plurality of kernel module groups.

According to various embodiments, when the load time of the second kernel module group is greater than the load time of the first kernel module group, the first processor may generate a fourth kernel module group and a fifth kernel module group by separating the second kernel module group. The first processor may decrease the total kernel module load time by dividing a kernel module group of which the load time is relatively long.

According to various embodiments, the second processor may receive a plurality of kernel module groups generated based on dependency among a plurality of kernel modules executed by the second processor. In operation 431, the second processor may perform parallel loading based on the received kernel module group and may measure the load time of the plurality of kernel modules.

According to various embodiments, the second processor may perform parallel loading on the plurality of kernel modules based on the plurality of kernel module groups. The second processor may generate a restructured kernel module group by restructuring the plurality of kernel module groups based on the load time of the plurality of kernel modules.

According to various embodiments, in operation 432, the second processor may determine whether the second electronic device is on an initial boot or the second electronic device is on a first boot after over the air (OTA). In operation 433, when the second electronic device is on the initial boot or the first boot after OTA, the second processor may perform parallel loading based on the plurality of kernel module groups.

According to various embodiments, in operation 434, when the second electronic device is not on the initial boot or the first boot after OTA, the second processor may generate a restructured kernel module group by restructuring the plurality of kernel module groups based on the measured load time.

According to various embodiments, the second processor may integrate the first kernel module group with the second kernel module group among the plurality of kernel module groups based on the load time. The second processor may measure load times of the first kernel module group, the second kernel module group, and a third kernel module group among the plurality of kernel module groups. When the load time of the third kernel module group is greater than the load time of the first kernel module group and the load time of the second kernel module group, the second processor may integrate the first kernel module group with the second kernel module group.

According to various embodiments, the second processor may generate a kernel module group by separating at least one kernel module group based on the load time. The second processor may measure load times of the first kernel module group and the second kernel module group among the plurality of kernel module groups. When the load time of the second kernel module group is greater than the load time of the first kernel module group, the second processor may generate a fourth kernel module group and a fifth kernel module group by separating the second kernel module group.

According to various embodiments, the second processor may restructure the plurality of kernel module groups using a dependency graph generated based on the dependency. The dependency graph may include nodes corresponding to the plurality of kernel modules and may include an edge connecting the nodes based on the dependency. According to various embodiments, the second processor may perform parallel loading again on the plurality of kernel module groups based on the restructured kernel module group.

According to various embodiments, in operation 435, the second processor may operate kernel modules loaded in parallel.

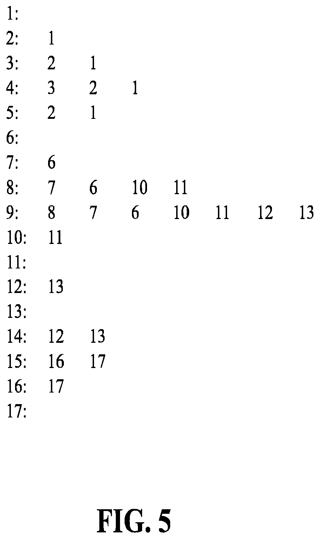

FIG. 5 illustrates dependency of kernel modules according to various embodiments and FIG. 6 illustrates a dependency graph according to various embodiments.

Referring to FIGS. 5 and 6, according to various embodiments, a processor (e.g., the processor 120 of FIG. 1) may obtain dependency among a plurality of kernel modules. The dependency may be a relationship with other kernel modules to be priorly loaded to load an arbitrary kernel module.

According to various embodiments, in FIG. 5, numbers 1 to 17 may be numbers corresponding to kernel modules, respectively. A number after a colon may be a kernel module to be priorly loaded to load a kernel module before the colon. In other words, a number after a colon may be a kernel module having dependency with a kernel module before the colon. For example, to load a kernel module 1, a kernel module to be priorly loaded may not exist and the kernel module 1 may be priorly loaded to load a kernel module 2. The kernel module 2 and the kernel module 1 may need to be priorly loaded to load a kernel module 3 and the kernel modules 3, 2, and 1 may need to be priorly loaded to load a kernel module 4. As described above, kernel modules 5 to 17 may have dependencies.

According to various embodiments, the processor 120 may generate a dependency graph based on the dependency. The processor 120 may generate the dependency graph in the form of a tree. The processor may generate the dependency graph based on dependency among the plurality of kernel modules. The processor may generate nodes corresponding to the plurality of kernel modules. The processor may generate the dependency graph by generating an edge connecting the nodes based on the dependency.

According to various embodiments, the processor 120 may determine a first kernel module to be a root node of the dependency graph. The processor 120 may determine a kernel module to be loaded first to be the root node of the dependency graph. For example, the processor 120 may determine the kernel modules 1, 6, 11, 13, and 17 to be root nodes. The processor may priorly load the kernel modules determined to be the root nodes in the first stage.

According to various embodiments, the processor 120 may generate the dependency graph by connecting a second kernel module to a child node of the root node. The processor 120 may connect a child node based on a load order based on the dependency. For example, the processor 120 may connect the kernel module 2 to the kernel module 1, the kernel module 3 to the kernel module 2, and the kernel module 4 to the kernel module 3. The processor may generate a graph 610 by connecting the kernel module 5 to the kernel module 2. In this case, the kernel modules 2, 3, 4, and 5 may be loaded in the second stage. The processor 120 may cause the root nodes to be included in the build-time as vendor-boot.image such that the root nodes may be loaded in the first stage.

According to various embodiments, the processor 120 may generate a graph 630 and a graph 650 by connecting child nodes to the kernel modules 6, 11, 13, and 17 based on the dependency. In the examples of FIGS. 5 and 6, the kernel modules loaded in the first stage and the second stage may be summarized as shown in Table 1.

**[Table 1]**

| | |
|---|---|
| First stage | 1, 6, 11, 13, 17 |
| Second stage | 2, 3, 4, 5, 7, 8, 9, 10, 12, 13, 14, 15, 16 |

According to various embodiments, the graphs 610, 630, and 650 may correspond to kernel module groups, respectively. The number of generated kernel module groups may vary depending on the dependency among the kernel modules.

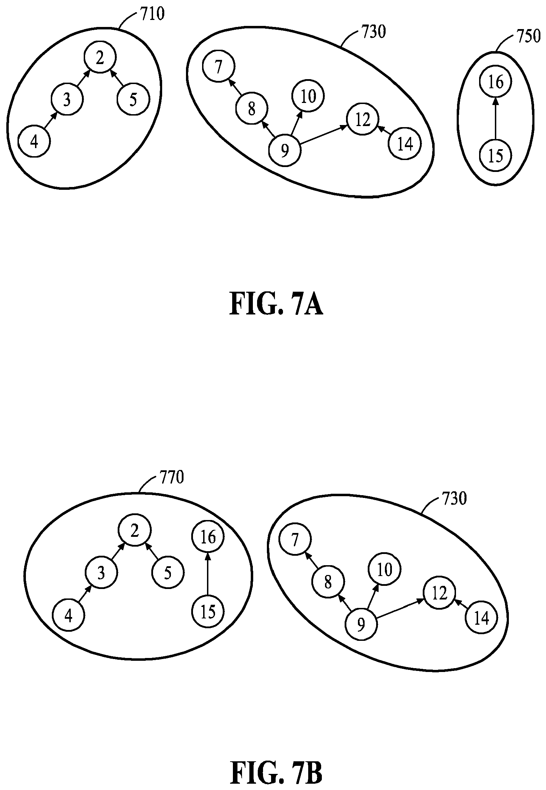

FIG. 7A illustrates an example of a kernel module group according to various embodiments and FIG. 7B illustrates an example of a restructured kernel module group according to various embodiments.

Referring to FIGS. 7A and 7B, according to various embodiments, a processor (e.g., the processor 120 of FIG. 1) may generate a plurality of kernel module groups based on a dependency graph. The processor 120 may generate a restructured kernel module group by performing restructuring based on the load time of the plurality of kernel module groups. Restructuring the kernel module group may be performed in both of the build-time or run-time. Restructuring of a module group performed in the build-time may be performed based on the actual kernel loading time in a previous boot.

According to various embodiments, the processor 120 may generate a kernel module group 710, a kernel module group 730, and a kernel module group 750 based on the dependency graph. The processor 120 may measure load times of the kernel module groups 710, 730, and 750 and may perform restructuring based on the load time. The kernel modules included in the kernel module group may be expressed as Table 2.

**[Table 2]**

| | |
|---|---|
| Kernel module group 710 | 2, 3, 4, 5 |
| Kernel module group 730 | 7, 8, 9, 10, 12, 14 |
| Kernel module group 750 | 15, 16 |

According to various embodiments, the processor 120 may integrate at least two of the kernel module group 710, the kernel module group 730, and the kernel module group 750 based on the load times of the kernel module groups 710, 730, and 750. When the load time of the kernel module group 730 is greater than the load time of the kernel module group 710 and the load time of the kernel module group 750, the processor 120 may generate a restructured kernel module group 770 by integrating the kernel module group 710 with the kernel module group 750. The processor 120 may prevent a problem that a parallel loading effect of which the load time is relatively long is degraded through restructuring the kernel module group. In this case, for the kernel load time, one piece of data may be used for each model. The kernel modules included in the restructured kernel module group 770 and the kernel module group 730 may be expressed as Table 3.

**[Table 3]**

| | |
|---|---|
| Kernel module group 730 | 2, 3, 4, 5, 15, 16 |
| Kernel module group 770 | 7, 8, 9, 10, 12, 14, 15, 16 |

According to various embodiments, the processor 120 may improve the kernel module load speed by allocating a single thread to each kernel module group and performing parallel loading at an operation time of an electronic device (e.g., the electronic device 101 of FIG. 1) using the restructured module group. For example, the processor 120 may load the kernel module group 730 and the kernel module group 750 in parallel respectively through a single thread. In this case, the number of threads used for parallel loading may be the same as the number of module groups after restructuring.

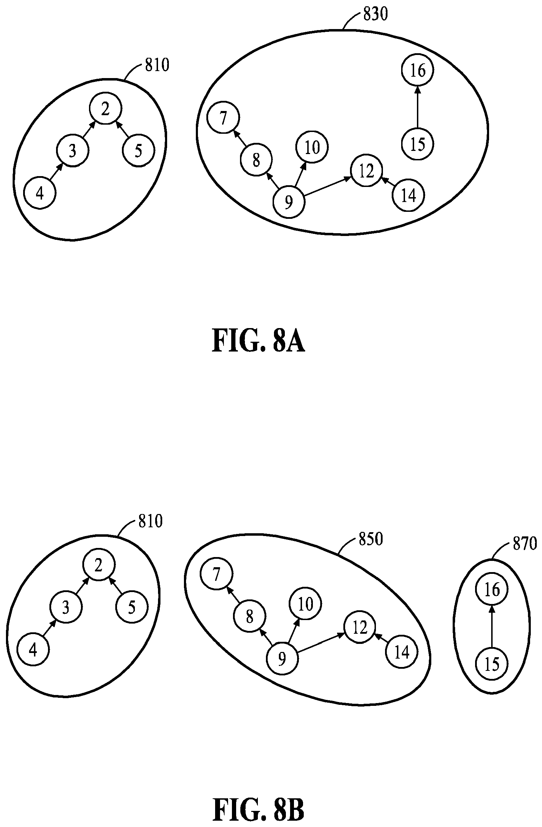

FIG. 8A illustrates an example of a kernel module group according to various embodiments and FIG. 8B illustrates an example of a restructured kernel module group according to various embodiments.

Referring to FIGS. 8A and 8B, according to various embodiments, a processor (e.g., the processor 120 of FIG. 1) may generate a plurality of kernel module groups based on a dependency graph. The processor 120 may generate a restructured kernel module group by performing restructuring based on the load time of the plurality of kernel module groups.

According to various embodiments, the processor 120 may generate a kernel module group 810 and a kernel module group 830 based on the dependency graph. The processor 120 may measure the load time of the kernel module group 810 and the load time of the kernel module group 830. The processor 120 may further generate a kernel module group by separating at least one kernel module group based on the measured load time.

According to various embodiments, the processor 120 may measure load times of the kernel module groups 810 and 830 and when the load time of the kernel module group 830 is greater than the load time of the kernel module group 810, the processor 120 may generate a kernel module group 850 and a kernel module group 870 by separating the kernel module group 830.

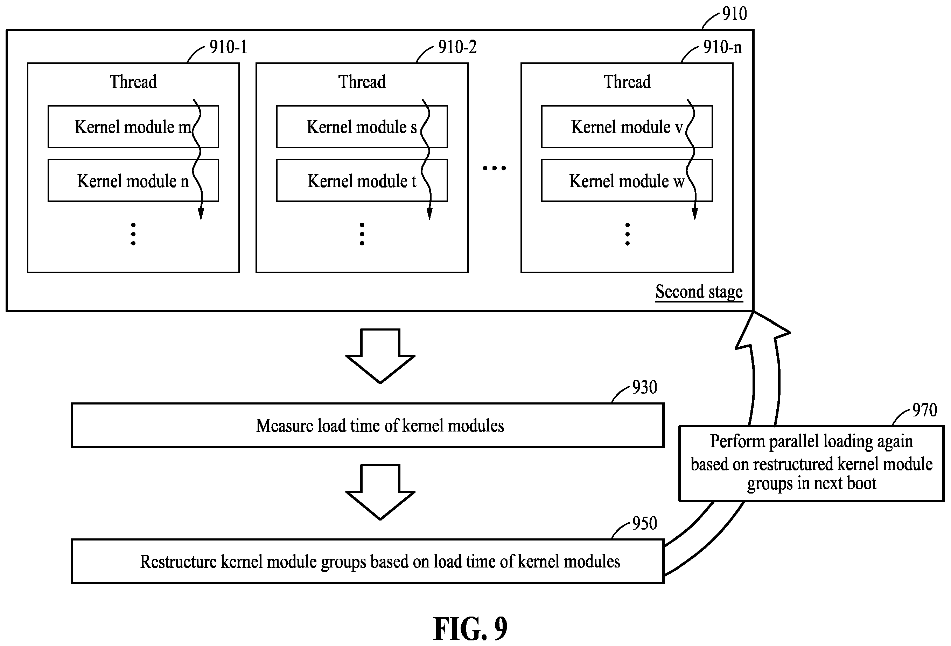

FIG. 9 illustrates a restructuring operation performed by an electronic device, according to various embodiments. A processor (e.g., the processor 120 of FIG. 1) may generate a restructured kernel module group by restructuring a plurality of kernel module groups based on the load time of a plurality of kernel modules.

According to various embodiments, when an electronic device (e.g., the electronic device 101 of FIG. 1) is on an initial boot or the first boot after OTA, the processor 120 may perform parallel loading using kernel module group data included in an OTA image. In this case, the processor 120 may store the actual load time of a kernel module in a memory (e.g., the memory 130 of FIG. 1). The processor 120 may dynamically restructure a kernel module group using the load time stored in an idle time of the electronic device 101.

According to various embodiments, the processor 120 may dynamically restructure a kernel module group during a run-time. In operation 930, the processor 120 may measure the load time of a plurality of kernel modules loaded through a plurality of threads 910-1, 910-2, .., 910-n in a second stage 910. In operation 950, the processor 120 may restructure the kernel module groups based on the load time of the plurality of kernel modules.

According to various embodiments, in operation 970, the processor 120 may perform parallel loading based on the restructured kernel module group in a next boot. The processor 120 may improve the kernel module load speed through restructuring the kernel module group. Even if the load speed of a predetermined kernel module is delayed compared to the load time of a kernel module group used in the initial boot depending on a state of the electronic device 101, the processor 120 may stably maintain the load speed of the kernel module based on the state of the electronic device 101.

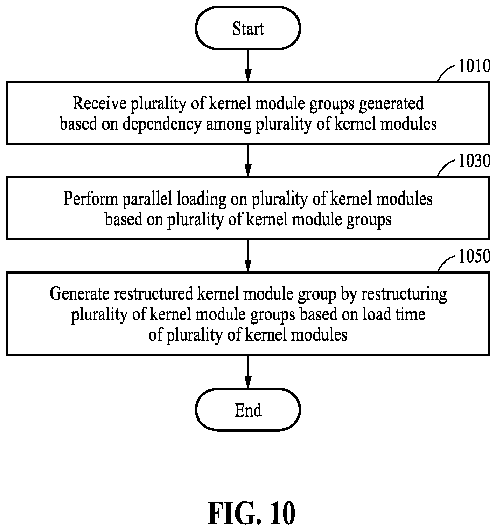

FIG. 10 is a flowchart illustrating an operation of an electronic device according to various embodiments.

Referring to FIG. 10, according to various embodiments, in operation 1010, a processor (e.g., the processor 120 of FIG. 1) may receive a plurality of kernel module groups generated based on dependency among a plurality of kernel modules.

According to various embodiments, in operation 1030, the processor 120 may perform parallel loading on the plurality of kernel modules based on the plurality of kernel module groups.

According to various embodiments, in operation 1050, the processor 120 may generate a restructured kernel module group by restructuring the plurality of kernel module groups based on the load time of the plurality of kernel modules.

According to various embodiments, the processor 120 may perform parallel loading again on the plurality of kernel modules group based on the plurality of kernel module groups. The processor 120 may measure the load time of the plurality of kernel modules. The processor 120 may generate a restructured kernel module group by restructuring a plurality of kernel module groups based on a load time.

According to various embodiments, the processor 120 may integrate a first kernel module group with a second kernel module group among the plurality of kernel module groups based on the load time. The processor 120 may measure load times of the first kernel module group, the second kernel module group, and a third kernel module group among the plurality of kernel module groups. When the load time of the third kernel module group is greater than the load time of the first kernel module group and the load time of the second kernel module group, the processor 120 may integrate the first kernel module group with the second kernel module group.

According to various embodiments, the processor 120 may generate a kernel module group by separating at least one kernel module group based on the load time. The processor 120 may measure load times of the first kernel module group and the second kernel module group among the plurality of kernel module groups. When the load time of the second kernel module group is greater than the load time of the first kernel module group, the processor 120 may generate a fourth kernel module group and a fifth kernel module group by separating the second kernel module group.

According to various embodiments, the processor 120 may restructure the plurality of kernel module groups using a dependency graph generated based on the dependency. The dependency graph may include nodes corresponding to the plurality of kernel modules and may include an edge connecting the nodes based on the dependency.

According to various embodiments, an electronic device (e.g., the electronic device 101 of FIG. 1) may include at least one processor (e.g., the processor 120 of FIG. 1) and a memory (e.g., the memory 130 of FIG. 1) configured to store instructions to be executed by the processor, wherein the processor may be configured to generate dependency relationship data based on dependency among a plurality of kernel modules executed by the processor, determine a first kernel module to be loaded in a first stage among the plurality of kernel modules based on the dependency relationship data, and generate a plurality of kernel module groups by determining a second kernel module to be loaded in a second stage among the plurality of kernel modules based on the dependency relationship data and the first kernel module.

According to various embodiments, the processor may be configured to generate the nodes corresponding to the plurality of kernel modules and generate the dependency graph by generating the edge connecting the nodes based on the dependency.

According to various embodiments, the processor may be configured to determine the first kernel module to be a root node of the dependency graph and generate the dependency graph by connecting the second kernel module to a child node of the root node.

According to various embodiments, an operation of loading a kernel module of the first stage may be performed chronologically ahead of an operation of loading a kernel module of the second stage.

According to various embodiments, the processor may be configured to perform parallel loading on the plurality of kernel modules based on the plurality of kernel module groups.

According to various embodiments, the processor may be configured to measure a load time of the plurality of kernel module groups and generate a restructured kernel module group by restructuring the plurality of kernel module groups based on the load time.

According to various embodiments, the processor may be configured to integrate the first kernel module group with the second kernel module group among the plurality of kernel module groups based on the load time.

According to various embodiments, the processor may be configured to measure load times of the first kernel module group, the second kernel module group, and a third kernel module group among the plurality of kernel module groups and when the load time of the third kernel module group is greater than the load time of the first kernel module group and the load time of the second kernel module group, integrate the first kernel module group with the second kernel module group.

According to various embodiments, the processor may be configured to further generate a kernel module group by separating at least one kernel module group based on the load time.

According to various embodiments, the processor may be configured to measure load times of the first kernel module group and the second kernel module group among the plurality of kernel module groups and when the load time of the second kernel module group is greater than the load time of the first kernel module group, generate a fourth kernel module group and a fifth kernel module group by separating the second kernel module group.

According to various embodiments, an electronic device (e.g., the electronic device 101 of FIG. 1) may include at least one processor, and a memory configured to store instructions to be executed by the processor, wherein the processor may be configured to receive a plurality of kernel module groups generated based on dependency among a plurality of kernel modules executed by the processor, perform parallel loading on the plurality of kernel modules based on the plurality of kernel module groups, and generate a restructured kernel module group by restructuring the plurality of kernel module groups based on the load time of the plurality of kernel modules.

According to various embodiments, the processor may be configured to perform parallel loading again on the plurality of kernel module groups based on the restructured kernel module group.

According to various embodiments, the processor may be configured to measure a load time of the plurality of kernel modules and generate a restructured kernel module group by restructuring the plurality of kernel module groups.

According to various embodiments, the processor may be configured to integrate the first kernel module group with the second kernel module group among the plurality of kernel module groups based on the load time.

According to various embodiments, the processor may be configured to measure load times of the first kernel module group, the second kernel module group, and a third kernel module group among the plurality of kernel module groups and when the load time of the third kernel module group is greater than the load time of the first kernel module group and the load time of the second kernel module group, integrate the first kernel module group with the second kernel module group.

According to various embodiments, the processor may be configured to further generate a kernel module group by separating at least one kernel module group based on the load time.

According to various embodiments, the processor may be configured to measure load times of the first kernel module group and the second kernel module group among the plurality of kernel module groups and when the load time of the second kernel module group is greater than the load time of the first kernel module group, generate a fourth kernel module group and a fifth kernel module group by separating the second kernel module group.

According to various embodiments, the processor may be configured to restructure the plurality of kernel module groups using a dependency graph generated based on the dependency.

According to various embodiments, the dependency graph may include nodes corresponding to the plurality of kernel modules and an edge connecting the nodes based on the dependency.

According to various embodiments, a method of loading a plurality of kernel modules in an electronic device may include receiving a plurality of kernel module groups generated based on dependency among the plurality of kernel modules, performing parallel loading on the plurality of kernel modules based on the plurality of kernel module groups, and generating a restructured kernel module group by restructuring the plurality of kernel module groups based on a load time of the plurality of kernel modules.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to one embodiment of the disclosure, the electronic device is not limited to those described above.

It should be appreciated that embodiments of the disclosure and the terms used therein are not intended to limit the technological features set forth herein to particular embodiments. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st," "2nd," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120); and
a memory (130) configured to store instructions to be executed by the processor,
wherein the processor (120) is configured to:
generate dependency relationship data based on dependency among a plurality of kernel modules executed by the processor,
determine a first kernel module to be loaded in a first stage among the plurality of kernel modules based on the dependency relationship data, and
generate a plurality of kernel module groups by determining a second kernel module to be loaded in a second stage among the plurality of kernel modules based on the dependency relationship data and the first kernel module, wherein the dependency relationship data comprises a dependency graph constituted by nodes and an edge connecting the nodes, and
the processor (120) is further configured to:
generate the nodes corresponding to the plurality of kernel modules, and
generate the dependency graph by generating the edge connecting the nodes based on the dependency, wherein the processor (120) is further configured to:
determine the first kernel module to be a root node of the dependency graph, and
generate the dependency graph by connecting the second kernel module to a child node of the root node,
measure load times of the first kernel module group, the second kernel module group, and a third kernel module group among the plurality of kernel module groups, and
when the load time of the third kernel module group is greater than the load time of the first kernel module group and the load time of the second kernel module group, integrate the first kernel module group with the second kernel module group to form a new first kernel group, and
parallel loading the new first kernel module group and the third kernel module group.

2. The electronic device (101) of claim 1, wherein the processor (120) is further configured to further generate a kernel module group by separating at least one kernel module group based on the load time.

3. The electronic device (101) of claim 2, wherein the processor (120) is further configured to:
measure load times of a first kernel module group and a second kernel module group among the plurality of kernel module groups, and
when the load time of the second kernel module group is greater than the load time of the first kernel module group, generate a fourth kernel module group and a fifth kernel module group by separating the second kernel module group.

## Patentansprüche

1. Elektronische Vorrichtung (101), die Folgendes umfasst:
mindestens einen Prozessor (120); und
einen Speicher (130), der so konfiguriert ist, dass er Anweisungen speichert, die von dem Prozessor ausgeführt werden sollen,
wobei der Prozessor (120) zu Folgendem konfiguriert ist:
Erzeugen von Abhängigkeitsbeziehungsdaten basierend auf der Abhängigkeit zwischen einer Vielzahl von von dem Prozessor ausgeführten Kernelmodulen,
Bestimmen eines ersten Kernelmoduls, das in einer ersten Phase aus der Vielzahl von Kernelmodulen geladen werden soll, basierend auf den Abhängigkeitsbeziehungsdaten, und
Erzeugen einer Vielzahl von Kernelmodulgruppen durch Bestimmen eines zweiten Kernelmoduls, das in einer zweiten Phase aus der Vielzahl von Kernelmodulen geladen werden soll, basierend auf den Abhängigkeitsbeziehungsdaten und dem ersten Kernelmodul, wobei die Abhängigkeitsbeziehungsdaten einen Abhängigkeitsgraphen umfassen, der aus Knoten und einer Kante besteht, die die Knoten verbindet, und
wobei der Prozessor (120) ferner zu Folgendem konfiguriert ist:
Erzeugen der Knoten, die der Vielzahl von Kernelmodulen entsprechen, und
Erzeugen des Abhängigkeitsgraphen durch Erzeugen der Kante, die die Knoten verbindet, basierend auf der Abhängigkeit, wobei der Prozessor (120) ferner zu Folgendem konfiguriert ist:
Bestimmen des ersten Kernelmoduls als Wurzelknoten des Abhängigkeitsgraphen, und
Erzeugen des Abhängigkeitsgraphen durch Verbinden des zweiten Kernelmoduls mit einem untergeordneten Knoten des Wurzelknotens,
Messen der Ladezeiten der ersten Kernelmodulgruppe, der zweiten Kernelmodulgruppe und einer dritten Kernelmodulgruppe aus der Vielzahl von Kernelmodulgruppen, und
wenn die Ladezeit der dritten Kernelmodulgruppe größer als die Ladezeit der ersten Kernelmodulgruppe und die Ladezeit der zweiten Kernelmodulgruppe ist, Integrieren der ersten Kernelmodulgruppe in die zweite Kernelmodulgruppe, um eine neue erste Kernelgruppe zu bilden, und
paralleles Laden der neuen ersten Kernelmodulgruppe und der dritten Kernelmodulgruppe.

2. Elektronische Vorrichtung (101) nach Anspruch 1, wobei der Prozessor (120) ferner so konfiguriert ist, dass er ferner eine Kernelmodulgruppe durch Trennen mindestens einer Kernelmodulgruppe basierend auf der Ladezeit erzeugt.

3. Elektronische Vorrichtung (101) nach Anspruch 2, wobei der Prozessor (120) ferner zu Folgendem konfiguriert ist:
Messen der Ladezeiten einer ersten Kernelmodulgruppe und einer zweiten Kernelmodulgruppe aus der Vielzahl von Kernelmodulgruppen, und
wenn die Ladezeit der zweiten Kernelmodulgruppe größer als die Ladezeit der ersten Kernelmodulgruppe ist, Erzeugen einer vierten Kernelmodulgruppe und einer fünften Kernelmodulgruppe durch Trennen der zweiten Kernelmodulgruppe.

## Revendications

1. Dispositif électronique (101) comprenant :
au moins un processeur (120) ; et
une mémoire (130) configurée pour stocker des instructions à exécuter par le processeur,
où le processeur (120) est configuré pour :
générer des données de relation de dépendance sur la base d'une dépendance parmi une pluralité de modules de noyau exécutés par le processeur,
déterminer un premier module de noyau à charger dans une première étape parmi la pluralité de modules de noyau sur la base des données de relation de dépendance, et
générer une pluralité de groupes de modules de noyau en déterminant un deuxième module de noyau à charger dans une deuxième étape parmi la pluralité de modules de noyau sur la base des données de relation de dépendance et du premier module de noyau, où les données de relation de dépendance comprennent un graphe de dépendance constitué par des nœuds et une arête reliant les nœuds, et
le processeur (120) est en outre configuré pour :
générer les nœuds correspondant à la pluralité de modules de noyau, et
générer le graphe de dépendance en générant l'arête reliant les nœuds sur la base de la dépendance, où le processeur (120) est en outre configuré pour :
déterminer le premier module de noyau comme étant un nœud racine du graphe de dépendance, et
générer le graphe de dépendance en reliant le deuxième module de noyau à un nœud enfant du nœud racine,
mesurer les temps de charge du premier groupe de modules de noyau, le deuxième groupe de modules de noyau, et un troisième groupe de modules de noyau parmi la pluralité de groupes de modules de noyau, et
lorsque le temps de charge du troisième groupe de modules de noyau est supérieur au temps de charge du premier groupe de modules de noyau et au temps de charge du deuxième groupe de modules de noyau, intégrer le premier groupe de modules de noyau au deuxième groupe de modules de noyau pour former un nouveau premier groupe de noyau, et
charger en parallèle le nouveau premier groupe de modules de noyau et le troisième groupe de modules de noyau.

2. Dispositif électronique (101) selon la revendication 1, où le processeur (120) est en outre configuré pour générer en outre un groupe de modules de noyau en séparant au moins un groupe de modules de noyau sur la base du temps de charge.

3. Dispositif électronique (101) selon la revendication 2, où le processeur (120) est en outre configuré pour :
mesurer des temps de charge d'un premier groupe de modules de noyau et d'un deuxième groupe de modules de noyau parmi la pluralité de groupes de modules de noyau, et
lorsque le temps de charge du deuxième groupe de modules de noyau est supérieur au temps de charge du premier groupe de modules de noyau, générer un quatrième groupe de modules de noyau et un cinquième groupe de modules de noyau en séparant le deuxième groupe de modules de noyau.
